(19) Europäisches Patentamt
European Patent Office
Office européen des brevets

(11) Publication number: 0 057 661
B1

(12) **EUROPEAN PATENT SPECIFICATION**

(45) Date of publication of patent specification: **14.11.84**

(51) Int. Cl.[3]: **C 09 B 11/10,** C 09 B 11/24, C 09 B 11/26

(21) Application number: **82810018.0**

(22) Date of filing: **18.01.82**

(54) **Process for the production of leuco triaryl methane compounds.**

(30) Priority: **22.01.81 GB 8101899**

(43) Date of publication of application:
**11.08.82 Bulletin 82/32**

(45) Publication of the grant of the patent:
**14.11.84 Bulletin 84/46**

(84) Designated Contracting States:
**CH DE FR GB LI**

(56) References cited:
**EP-A-0 012 283**
**DE-A- 928 006**
**FR-A-2 252 388**
**GB-A-1 027 620**
**GB-A-2 072 163**
**US-A-2 726 252**
**US-A-3 925 094**

**Golleman/Wiberg, Lehrbuch der Anorganischen Chemie (1955), page 111-112**

(73) Proprietor: **CIBA-GEIGY AG**
**Postfach**
**CH-4002 Basel (CH)**

(72) Inventor: **Clark, Malcolm Colin, Dr.**
**61, Queensway Heald Green**
**Cheadle Cheshire SK8 3FT (GB)**
Inventor: **Hart, Derrick Alexander**
**8 Rowan Close**
**Rochdale Lancashire OL12 7JL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 057 661 B1

**Description**

The present invention relates to a process for the production of leuco triaryl methane compounds which, on oxidation, form a dyestuff.

Processes for the preparation of leuco triaryl methane compounds have already been proposed. For example US—A—2 726 252 and GB—A—1 027 620 disclose methods of preparing leuco triaryl methane compounds by reacting 1 mole of a p-aminobenzaldehyde with substantially 2 moles of a tertiary arylamine. The reaction is carried out in the presence of urea or a related compound and in anhydrous reaction conditions. The urea compound or its derivative functions as a catalyst and is used from 0.5 mole to 1 mole per mole of its aldehyde compound. In addition to the recovery process a purification step is carried out according to the two cited references. A novel process for the preparation of leuco triaryl methane compounds has now been found that does not require the conditions described in the above references.

Accordingly, the invention provides a process for the production of a compound of the formula

(1) 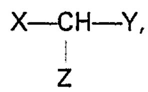

wherein X and Y may be the same or different and each represents an aromatic carbocyclic radical having an unsubstituted or substituted amino group in the para-position to the indicated bond, or a heterocyclic radical, and Z represents an aryl radical of the formula

(1a) 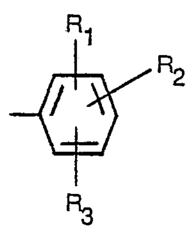 or (1b) 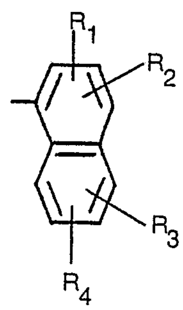

wherein $R_1$, $R_2$, $R_3$ and $R_4$ each independently of the other, represent hydrogen, hydroxy, halogen, cyano, nitro, $C_1$—$C_{12}$-alkyl, $C_2$—$C_{12}$-alkoxy, $C_2$—$C_8$-alkoxyalkyl, cycloalkyl, aralkyl, aryl, aryloxy, or substituted alkyl, cycloalkyl, aralkyl or aryl, or amino or substituted amino, or a sulphonic acid group or derivatives thereof such as a sulphonic acid metal salt, sulphonic acid ester or sulphonic acid amide group.

Preferably the aryl radical Z contains at least one water-solubilising group e.g. $SO_3M$ wherein M is hydrogen, ammonium or a metal which will give a water soluble salt such as an alkali metal e.g. sodium or potassium.

The process of the present invention comprises reacting a compound of formula

(2a) 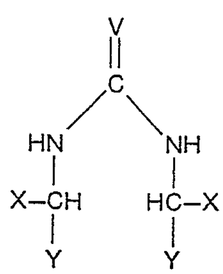 or (2b) 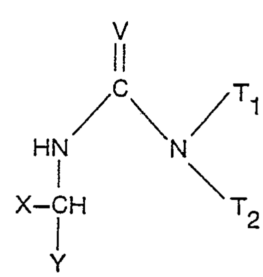

or a mixture of the compounds (2a) and (2b) with a compound ZH having an active hydrogen atom, under acidic conditions, wherein X, Y and Z have the meanings given above, and V represents oxygen, sulphur or imino and $T_1$ and $T_2$ independently represent hydrogen, $C_1$—$C_{12}$-alkyl, $C_2$—$C_{12}$-alkenyl, aryl or aralkyl, and $T_1$ may also represent amido or ureido, or $T_1$ and $T_2$ together with the nitrogen atom which links them represent a five- or six-membered, preferably saturated, heterocyclic radical.

As an aromatic carbocyclic radical, X and Y may be an amino-substituted phenyl radical of formula

(1c) 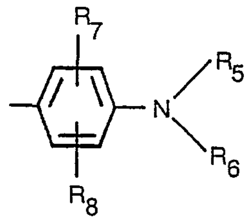

wherein $R_5$ and $R_6$ independently represent hydrogen, $C_1$—$C_{12}$-alkyl, $C_2$—$C_8$-alkoxyalkyl, cycloalkyl, aralkyl, aryl or substituted alkyl, cycloalkyl, aralkyl or aryl, or together represent methylene groups linked to form a heterocyclic ring which may optionally be interrupted by an oxygen, sulphur or nitrogen atom, such as pyrrolidino, piperidino, morpholino, thiomorpholino or piperazino, and $R_7$ and $R_8$ independently represent hydrogen, hydroxy, halogen, cyano, nitro, $C_1$—$C_4$-alkyl, $C_1$—$C_4$-alkoxy, $C_2$—$C_8$-alkoxyalkyl, cycloalkyl, aralkyl, aryloxy, arylamino, aryl or a carboxylic acid, carboxylic ester or carboxylic amide group. $R_5$ to $R_8$ may also include a water-solubilising group, e.g. $SO_3M$ or a sulphonic acid ester or amide group, which is preferably located at a benzene ring of an aryl, aralkyl, aryloxy or arylamino radical.

As a heterocyclic radical X and Y may represent a mono- or polycyclic (preferably di- or tricyclic) radical containing a 5- or 6-membered heterocyclic ring containing oxygen, sulphur and/or nitrogen as ring member, such as a thienyl, furyl, pyrrolyl, pyrazolyl, pyrazolonyl, pyridyl, thiazinyl, oxazinyl, benzothiazinyl, indolyl, indazolyl, benzothiazolyl, benzotriazolyl, naphthotriazolyl, quinolinyl, carbazolyl, phenothiazinyl or phenoxazinyl radical. The mono- or polynuclear heterocyclic radicals may be substituted by one or more of the groups defined for $R_7$ and $R_8$ above.

When X and/or Y is a heterocyclic radical, it is preferably one of the formula

(1d) 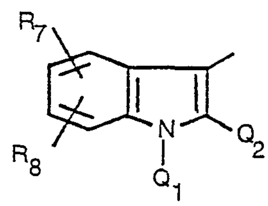

wherein $Q_1$ represents hydrogen, $C_1$—$C_{12}$-alkyl, $C_2$—$C_{12}$-alkenyl or benzyl and $Q_2$ represents hydrogen, $C_1$—$C_{12}$-alkyl or aryl, e.g. phenyl, and $R_7$ and $R_8$ have the given meanings.

Alkyl groups represented by each of $R_1$ to $R_8$, $T_1$, $T_2$, $Q_1$ and $Q_2$ may be straight or branched chain and are e.g. methyl, ethyl, n-propyl, isopropyl, n-butyl, sec.-butyl, octyl or dodecyl.

Alkoxyalkyl represented by each of the radicals $R_1$ to $R_8$ may have 1 to 4 carbon atoms in each part and is preferably $\beta$-methoxyethyl or $\beta$-ethoxethyl.

$Q_1$, $T_1$ and $T_2$ as alkenyl may be for example allyl, 2-methallyl, 2-ethylallyl, 2-butenyl or octenyl. Cycloalkyl within the definition of the R radicals is e.g. cyclopentyl or, prefably, cyclohexyl.

An aryl radical represented by each of R and T can be diphenyl, naphthyl or, preferably, phenyl. As aralkyl, R and T may be phenylethyl, phenylpropyl or, preferably, benzyl.

When $R_1$ to $R_6$ represent substituted alkyl, cycloalkyl, aralkyl or aryl, the substituent may be one or more halogen, hydroxy, cyano or alkyl and/or alkoxy groups having 1 to 4 carbon atoms.

When $R_1$, $R_2$, $R_3$ and $R_4$ represent a substituted amino, the substituents may be alkyl, aryl or aralkyl groups. These aryl or aralkyl groups may contain water-solubilising groups such as $—SO_3M$.

A heterocyclic radical formed by the pair of substituents ($R_5$ and $R_6$) and ($T_1$ and $T_2$), together with the nitrogen atom to which said pair is attached, is for example pyrrolidino, piperidino, pipecolino, morpholino, thiomorpholino or piperazino.

Z as an aryl radical for formula (1a) may be a radical of formula

(3) 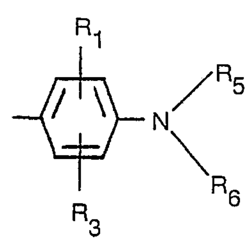

preferably a radical of the formula

(3a)

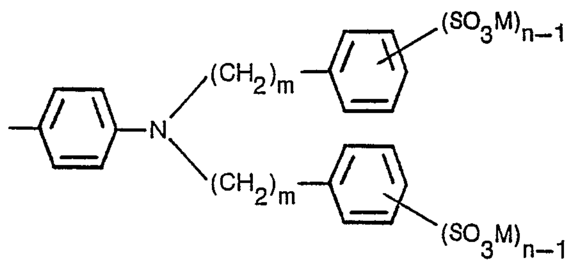

(3b)

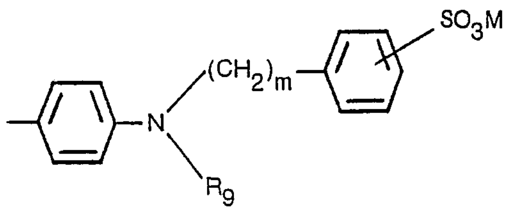

or a radical of the formula

(4)

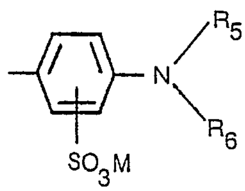

wherein $R_1$, $R_2$, $R_5$, $R_6$ and M are as defined above, $R_9$ is an alkyl or aryl group, m is 1 to 4, preferably 1, and n is 1 or 2.

When Z is an aryl radical of formula (1b) it may be a radical of formula

(5)

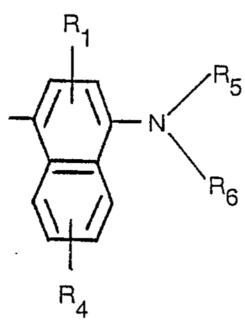

or of formula

(6)

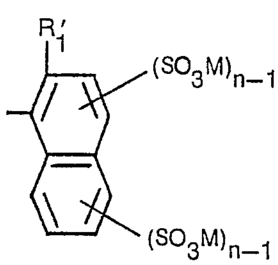

wherein $R_1$, $R_4$, $R_5$, $R_6$, M and n are as defined above and $R_1'$ is hydrogen or hydroxy.

Advantageously, each of $R_1$, $R_2$, $R_3$, $R_4$, $R_7$ and $R_8$ independently represents hydrogen, hydroxy, halogen, cyano, $C_1$—$C_4$-alkyl, $C_1$—$C_4$-alkoxy or —$SO_3M$, whilst $R_5$ and $R_6$ are preferably hydrogen, $C_1$—$C_4$-alkyl, $C_2$—$C_4$-alkoxyalkyl, cyclohexyl, benzyl, phenyl, or phenyl or benzyl each substituted by —$SO_3M$, wherein M is hydrogen, ammonium or alkali metal. $R_9$ is preferably $C_1$—$C_4$-alkyl or phenyl. Z is preferably a radical of formula (3a) or (6). $T_1$ and $T_2$ are preferably hydrogen. V is preferably oxygen.

The reaction to produce compounds of formula (1) from compounds of formula (2a) or (2b) is carried out under acidic conditions. Any non-oxidising strong inorganic or organic acid may be used, for example hydrochloric, sulphuric, phosphoric, formic, acetic, mono-, di- or trichloroacetic, benzenesulphonic, p-toluene sulphonic or oxalic acid. The acid may be anhydrous or aqueous.

The reaction may optionally be carried out in the presence of an alcoholic solvent, e.g. methanol or ethanol.

The reaction may be carried out at a temperature from 0° to 100°C, preferably from 80° to 100°C.

The compounds of formula (2a) or (2b) may be made by various routes, starting from the basic urea derivative of formula

(7) 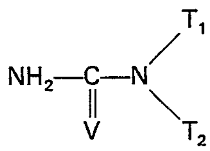

wherein $T_1$, $T_2$ and V have the given meanings.

This compound may be reacted under acidic conditions with one or two molar equivalents of an aldehyde which is XCHO or YCHO and one or two molar equivalents of a compound XH or YH having an active hydrogen atom, wherein X and Y have the meanings given. Sufficient acid should be used to protonate the amino groups in the radicals X and Y in compounds of formula (2a) or (2b) above.

This reaction may be carried out between ambient temperature and 100°C optionally in the presence of an organic solvent, such as an alcohol, e.g. methanol or isopropanol.

Suitable acids include hydrochloric, sulphuric, phosphoric, mono-, di- or trichloroacetic, benzenesulphonic or p-toluenesulphonic acid.

For example, p-dimethylaminobenzaldehyde of formula (8) may be reacted with urea and N,N-dimethylaniline in the presence of an acid to form 1,3-bis[(p-dimethylamino-diphenyl)methyl] urea of formula (9) according to the following scheme

(8) 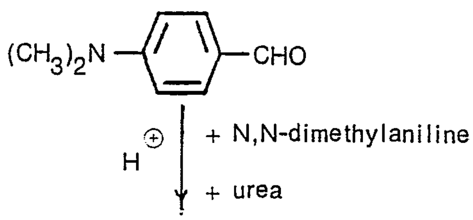


(9) 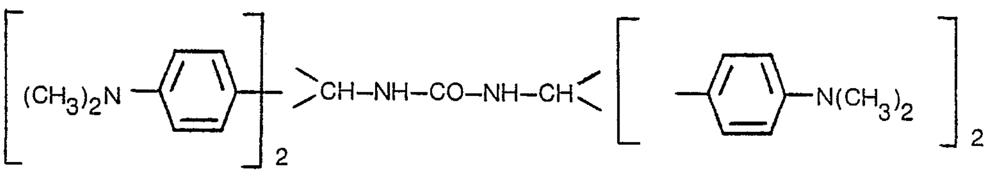

Generally, a mixture of the compound of the formula (9) and of the compound of formula

(9a) 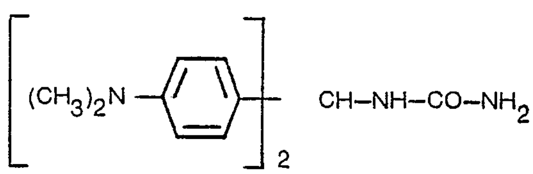

is obtained. The weight ratio of the compound of formula (9) to the compound of formula (9a) in advantageously between 1:9 to 9:1, preferably between 1:2 to 2:1.

It is preferred to use an excess of the active hydrogen compound and to remove the excess by filtration or steam distillation before reaction with the compound ZH.

The benzaldehyde derivatives used in these reaction schemes can be easily prepared by the so-called Vilsmeier-Haack synthesis (Ber. 1927, 60, 119). It is not always necessary to isolate the aldehyde before reacting it with urea and the active hydrogen compound.

Compounds of formula (2a), in which X and Y are aromatic carbocyclic radicals, can also be prepared by reacting the urea compound of formula (7) under acidic conditions, optionally in the presence of an organic solvent such as an alcohol or ketone, e.g. methanol, isopropanol or acetone, with a benzhydrol of formula

(10) 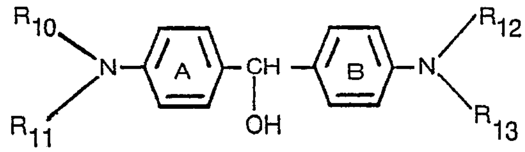

wherein the benzene rings A and B may be further substituted by one or more substituents selected from halogen, cyano, nitro, $C_1$—$C_4$-alkyl and $C_1$—$C_4$-alkoxy, and in which each of $R_{10}$, $R_{11}$, $R_{12}$ and $R_{13}$ independently represents $C_1$—$C_{12}$-alkyl, cycloalkyl, aralkyl, aryl, alkoxyaryl, in which the alkoxy group has 2 to 8 carbon atoms, or substituted alkyl, cycloalkyl, aralkyl or aryl.

Sufficient benzhydrol may be used to produce the compound of formula (2a) directly or only enough to react with one $NH_2$-group of the urea may be used. The resulting intermediate may then be reacted with more benzhydrol or with an aldehyde and active hydrogen compound as above to react with the other $NH_2$-group on the urea.

Suitable acids include hydrochloric, sulphuric, phosphoric, formic, mono-, di-, trichloroacetic acid, benzenesulphonic, p-toluene sulphonic or oxalic acid. Mineral acids are preferred on cost grounds.

The resulting compound of formula (2a) is then reacted under acidic conditions with a compound ZH to produce the compound of formula (1).

The resulting leuco compound of formula (1) may be converted into a dyestuff by oxidation in conventional manner. Suitable oxidising agents include sodium or potassium dichromate and sulphuric acid, manganese dioxide, lead(II)dioxide, chloranil, oxygen or air. The oxidation is normally carried out under aqueous conditions, optionally in the presence of an organic solvent such as an alcohol, at a reaction temperature of 20° to 100°C.

Since the compounds of formula (2a) and (2b) can readily be isolated in crystalline form from the reaction mixture, the resulting leuco compounds of formula (1) and the dyes produced from them can be obtained in a very pure form. For example, 4,4'-bis-(dimethylamino)benzhydrol (commonly known as Michler's Hydrol), when prepared by the oxidation route from 4,4'-bis(dimethylamino-diphenyl)-methane, can contain such impurities as the unchanged methane base, tetramethylbenzidine, the corresponding ketone (Michler's ketone) and a hydrol ether. These impurities, however, are not present when a compound of formula (2a) or (2b) is used and do not appear in the leuco compound and in the corresponding dyestuff obtained.

A further advantage of the process of the invention is that the compounds of formula (1) are obtained in good yields.

In the Examples which follow, the percentages are by weight, unless otherwise indicated.

## Example 1

150 g of dibenzylaniline are slowly added to a mixture of 104 g of 98% sulphuric acid and 46.5 g of 20% oleum at 60°C. The mixture is then stirred until a solution is obtained. Afterwards 146 g of 65% oleum are added at 60°C, the mixture is heated to 75°C and stirred at this temperature until disulphonation of the dibenzylaniline is complete. The sulphonation mass is poured into 840 ml water, then 140 g of sodium carbonate is carefully added and stirred to dissolve. The urea compound of Michler's hydrol, consisting of a mixture of compounds of formulae (9) and (9a) as filter cake, (equivalent to 120 g of Michler's hydrol 100%), is added at 40°C and the volume is adjusted to about 2.3 liters with water. The mixture is heated to 90°C and maintained 1—4 hours at this temperature until the condensation is complete. The condensation mixture is then neutralised to pH 6—6.5 with 200 g of calcium hydroxide at 85—90°C and the solution is clarified. The residues are washed with hot water and sucked dry. The combined mother liquor and washings containing the leuco compound are then oxidised using sodium dichromate and sulphuric acid to give, after isolation as a tar, followed by drying, 300 g of concentrated dyestuff having the formula

(11) 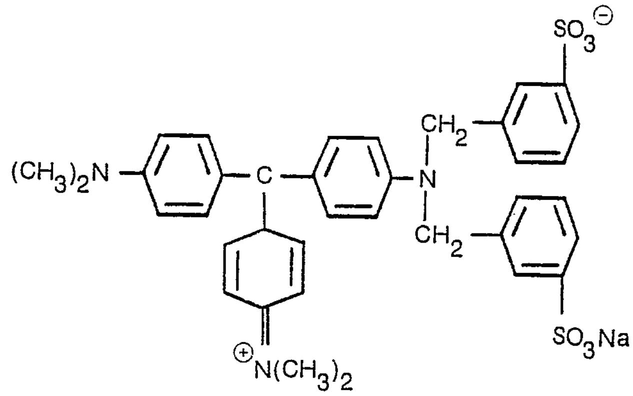

This compound dyes wool a brilliant violet shade.

Example 2

209 g of 98% sulphuric acid are carefully diluted with 110 g of ice-water and cooled to 20°C. 59 g of 2-naphthoil-3,6-disulphonic acid and the urea compound of Michler's hydrol (= mixutre of compounds of formulae (9) and (9a)) as filter cake (equivalent to 46 g of Michler's hydrol 100%), are added at a temperature below 35°C. The mixture is stirred for 30 minutes and then heated to 80°C and kept at 80°C for 2—6 hours until the condensation is complete. The mixture is poured into 900 ml of cold water, stirred for 4 hours and then filtered. The filter cake of the leuco compound is washed acid free with cold water, yielding 49 g of a compound of the formula

(12)

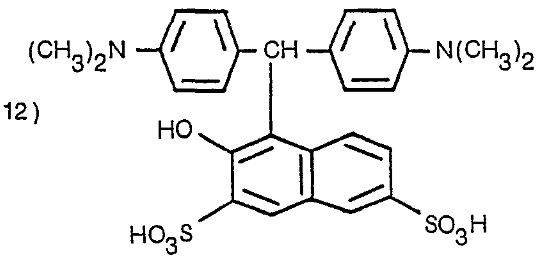

The leuco compound is then oxidised using manganese dioxide to give the dyestuff of formula

(13)

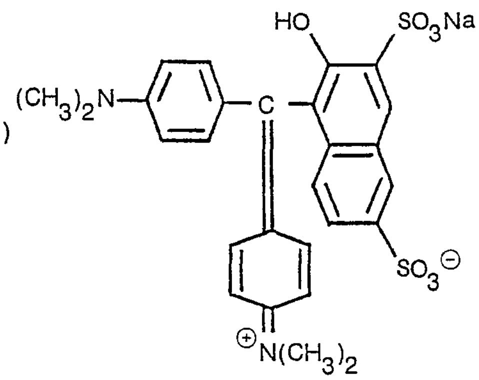

This compound dyes wool a bright green shade.

Example 3

18.5 g of phosphorus oxychloride are slowly added over 3 hours to a mixture of 18 g of dry dimethylformamide and 35.7 g of diethylaniline at 60—65°C. The mixture is stirred for a further hour at 60—65°C and then drowned into 50 g of ice/water. 7.2 g of urea are added to the drowned mass and the mixture is stirred at 50°C for 48 hours. The mixture is then added to a mixture of 34.6 g of naphthalene-2,7-disulphonic acid in 215 g of water and stirred overnight at room temperature. The pH is then adjusted to 3.5 with sodium hydroxide solution and the whole diluted to 625 ml with water and stirred overnight. The naphthalene-2,7-disulphonic acid addition complex of the mixture of 1,3-bis(4,4'-bis-diethylamino-diphenyl-methyl) urea and 1-(4,4'-diethylamino-diphenyl-methyl) urea is then filtered off, washed with cold water and dried at 70°C in a vacuum oven:yield 46.6 g. This complex is then added at 60—70°C over 20 minutes to 85 g of 14.5% sulphuric acid and the mixture is heated to 100°C, kept for 8 hours at this temperature and drowned into 155 g water. The volume is adjusted to 280 ml with cold water and the mixture is stirred at room temperature to precipitate the leuco compound of the formula

(14)

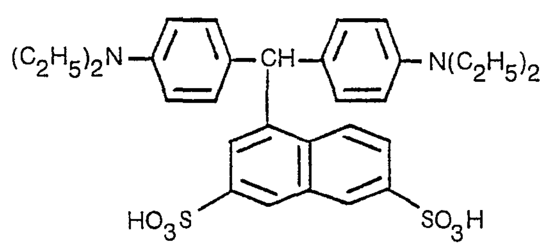

This compound is filtered off and washed acid-free to yield 17 g of leuco compound 100% (by sodium hydroxide titration). The leuco compound is then oxidised with sodium dichromate and oxalic acid to give the dyestuff of formula

(15) 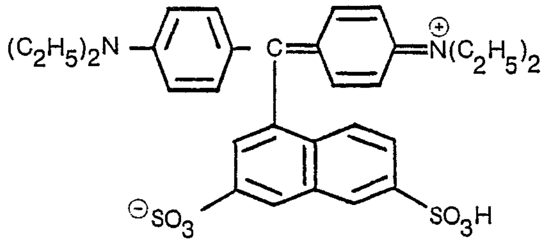

which dyes wool a bright green shade.

**Claims**

1. A process for the production of a compound of formula

(1) 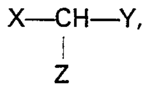

which comprises reacting a compound of formula

(2a) 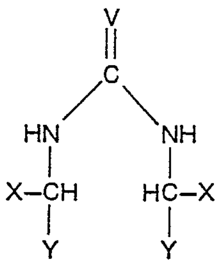 or (2b) 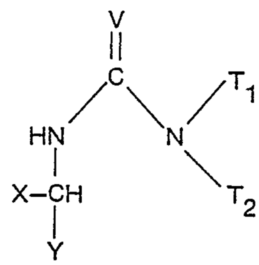

or a mixture of the compounds (2a) and (2b) with a compound ZH having an active hydrogen atom, under acidic conditions, wherein X and Y are the same or different and each represents an aromatic carbocyclic radical having an unsubstituted or substituted amino group in the para-position to the indicated bond, or a heterocyclic radical, and Z represents an aryl radical of formula

(1a) 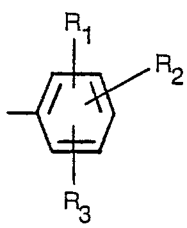 or (1b) 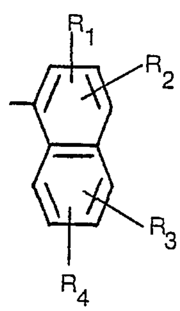

wherein $R_1$, $R_2$, $R_3$ and $R_4$, each independently of the other, represent hydrogen, hydroxy, halogen, cyano, nitro, $C_1$—$C_{12}$-alkyl, $C_1$—$C_{12}$-alkoxy, $C_2$—$C_8$-alkoxyalkyl, cycloalkyl, aralkyl, aryl, aryloxy, or substituted alkyl, cycloalkyl, aralkyl or aryl, or amino or substituted amino, or a sulphonic acid group or a derivative thereof, V represents oxygen, sulphur or imino and $T_1$ and $T_2$ independently represent hydrogen, $C_1$—$C_{12}$-alkyl, $C_2$—$C_{12}$-alkenyl, aryl, aralkyl, and $T_1$ is also amido or ureido, or $T_1$ and $T_2$ together with the nitrogen atom which links them represent a five- or six-membered heterocyclic radical.

2. A process according to claim 1, wherein $R_1$, $R_2$, $R_3$, $R_4$ independently represent hydrogen, hydroxy, halogen, cyano, $C_1$—$C_4$-alkyl, $C_1$—$C_4$-alkoxy, amino, substituted amino or —$SO_3M$, wherein M is hydrogen, ammonium or alkali metal.

3. A process according to claim 1 or 2, wherein X and Y independently represent an amino-substituted phenyl radical of formula

(1c) 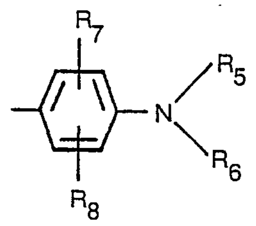

wherein $R_5$ and $R_6$ independently represent hydrogen, $C_1$—$C_{12}$ alkyl, $C_2$—$C_8$ alkoxyalkyl, cycloalkyl, aralkyl, aryl or substituted alkyl, cycloalkyl, aralkyl or aryl, or $R_5$ and $R_6$ together with the nitrogen atom which links them represent pyrolidino, piperidino, morpholino, thiomorpholino or piperazino, and $R_7$ and $R_8$ independently represent hydrogen, hydroxy, halogen, cyano, nitro, $C_1$—$C_4$-alkyl, $C_1$—$C_4$-alkoxy, $C_2$—$C_8$-alkoxyalkyl, cycloalkyl, aralkyl, aryl, aryloxy, arylamino, or a carboxylic acid, carboxylic ester or carboxylic amide group.

4. A process according to claim 3, wherein one or more of the substituents $R_5$, $R_6$, $R_7$ and $R_8$ contain a water-solubilising group, especially a —$SO_3M$ group, wherein M is hydrogen, ammonium or alkali metal.

5. A process according to claim 4, wherein $R_5$ and $R_6$ independently are hydrogen, $C_1$—$C_4$-alkyl, $C_2$—$C_4$-alkoxyalkyl, cyclohexyl, benzyl, phenyl, or phenyl or benzyl each substituted by —$SO_3M$, wherein M is hydrogen, ammonium or alkali metal.

6. A process according to claim 1, wherein X and Y independently represent an indolyl radical of the formula

(1d) 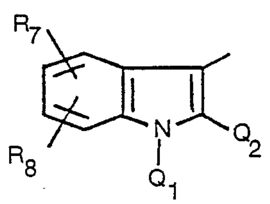

wherein $Q_1$ represents hydrogen, $C_1$—$C_{12}$-alkyl, $C_2$—$C_{12}$-alkenyl or benzyl, $Q_2$ represents hydrogen, $C_1$—$C_{12}$-alkyl or aryl, and $R_7$ and $R_8$ independently represent hydrogen, hydroxy, halogen, cyano, nitro, $C_1$—$C_4$-alkyl, $C_1$—$C_4$-alkoxy, $C_2$—$C_8$-alkoxyalkyl, cycloalkyl, aralkyl, aryl, aryloxy, arylamino, or a carboxylic acid, carboxylic ester or carboxylic amide group.

7. A process according to claim 1, wherein Z is a radical of formula

(3) 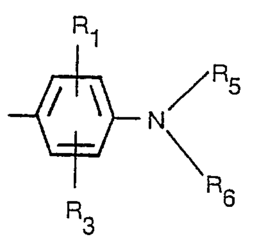 or 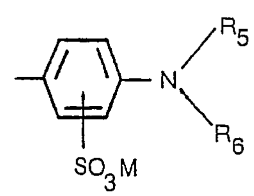 (4)

wherein $R_5$ and $R_6$ independently represent hydrogen, $C_1$—$C_{12}$ alkyl, $C_2$—$C_8$ alkoxyalkyl, cycloalkyl, aralkyl, aryl or substituted alkyl, cycloalkyl, aralkyl or aryl, or $R_5$ and $R_6$ together with the nitrogen atom which links them represent pyrrolidino, piperidino, morpholino, thiomorpholino or piperazino, M is hydrogen, ammonium or alkali metal and $R_1$ and $R_2$ are as defined in claim 1.

8. A process according to claim 7, wherein Z is a radical of formula

(3a) 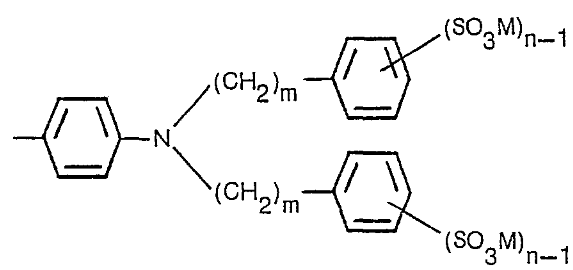

(3b) 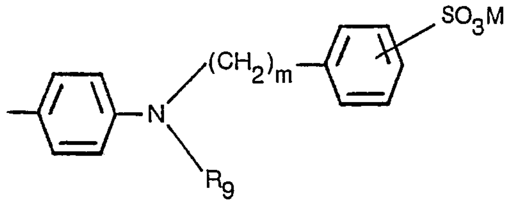

wherein $R_9$ is alkyl or aryl, m is 1 to 4, n is 1 or 2 and M is as defined in claim 7.

9. A process according to claim 1, wherein Z is a radical of formula

(5) 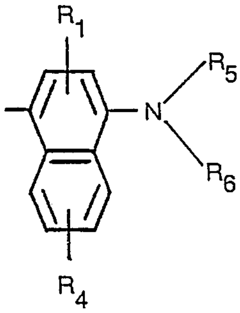 or (6) 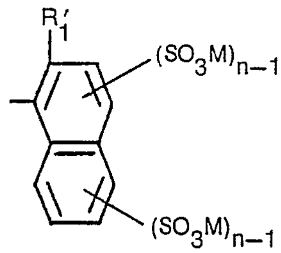

wherein $R_1'$ is hydrogen or hydroxy, n is 1 or 2, and $R_1$ and $R_4$ are as defined in claim 1, $R_5$ and $R_6$ independently represent hydrogen, $C_1$—$C_{12}$ alkyl, $C_2$—$C_8$ alkoxyalkyl, cycloalkyl, aralkyl, aryl or substituted alkyl, cycloalkyl, aralkyl or aryl, or $R_5$ and $R_6$ together with the nitrogen atom which links them represent pyrrolidino, piperidino, morpholino, thiomorpholino or piperazino, M is hydrogen, ammonium or alkali metal.

10. A process according to claim 8 or 9, wherein Z is a radical of formula (3a) or (6).

11. A process according to claim 1 wherein the compounds of formula (2a) and (2b) or a mixture thereof are prepared by reacting a compound of the formula

(7) 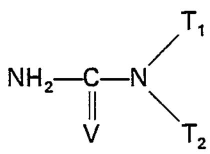

wherein V, $T_1$ and $T_2$ are as defined in claim 1, under acidic conditions, with one or two molar equivalents of an aldehyde which is X—CHO or Y—CHO and one or two molar equivalent of a compound XH or YH, wherein X and Y are as defined in claim 1.

12. A process according to claim 11 wherein p-dimethylamino-bezaldehyde is reacted with urea and N,N-dimethylaniline, in the presence of an acid, to form N-[4,4'-dimethylamino-diphenyl-methyl]-urea or N,N'-bis[4,4'-dimethyl-amino-diphenyl-methyl]urea or a mixture of these urea derivatives.

13. A process according to claim 1, wherein a compound of formula (2a) is used, wherein each of X and Y is an aromatic carbocyclic radical having an unsubstituted or substituted amino group in the para-position, wherein this compound of formula (2a) is produced by reacting a compound of formula

(7) 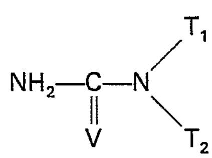

wherein V, $T_1$ and $T_2$ are as defined in claim 1, under acidic conditions, with a benzhydrol or formula

(10) 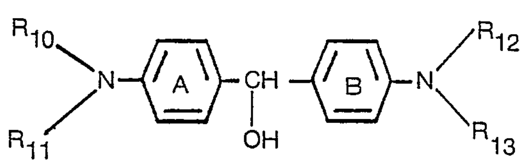

wherein the benzene rings A and B are unsubstituted or substituted by one or more substituents selected from halogen, cyano, nitro, $C_1$—$C_4$-alkyl and $C_1$—$C_4$-alkoxy, and in which $R_{10}$, $R_{11}$, $R_{12}$ and $R_{13}$

each independently represent $C_1$—$C_{12}$-alkyl, cycloalkyl, aralkyl, aryl, alkoxyaryl, in which the alkoxy group has 2 to 8 carbon atoms, or substituted alkyl, cycloalkyl, aralkyl or aryl.

**Revendications**

1. Procédé pour la préparation d'un composé de formule

(1) 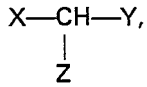

qui consiste à faire réagir un composé de formules

(2a) 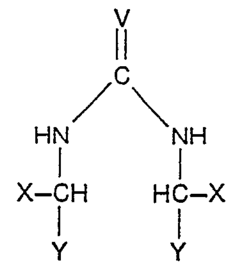 ou (2b) 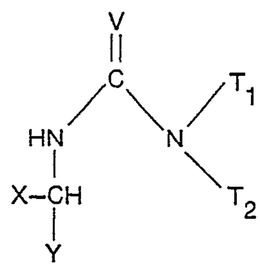

ou un mélange des composés (2a) et (2b) avec un composé ZH possèdant un atome d'hydrogène actif, dans des conditions acide, où X et Y sont identiques ou différents et représentent chacun un radical carbocyclique aromatique portant un groupe amino, non substitué ou substitué, en position para par rapport à la liaison indiquée, ou bien un radical hétérocyclique, et Z représente un radical aryle de formules

(1a) 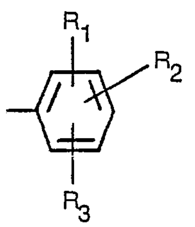 ou (1b) 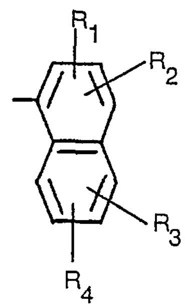

dans lesquelles $R_1$, $R_2$, $R_3$ et $R_4$ représentent chacun indépendamment l'un de l'autre un atome d'hydrogène, un groupe hydroxyle, halogéno, cyano, nitro, $C_1$—$C_{12}$-alkyle, $C_1$—$C_{12}$-alcoxy. $C_2$—$C_8$-alcoxyalkyle, cycloalkyle, aralkyle, aryle, aryloxy, ou bien un groupe alkyle, cycloalkyle, aralkyle ou aryle, substitué, ou bien un groupe amino ou amino substitué, ou un groupe acide sulfonique ou un dérivé de cet acide; V représente un atome d'oxygène, de soufre ou un groupe imino, et $T_1$ et $T_2$ représentent indépendamment des atomes d'hydrogène, des groupes $C_1$—$C_{12}$-alkyle, $C_1$—$C_{12}$-alcényle, aryle, aralkyle, et $T_1$ est également un groupe amino ou uréido; ou bien $T_1$ et $T_2$ ensemble avec l'atome d'azote qui les relie représentent un radical hétérocyclique à 5 ou 6 chaînons.

2. Procédé selon la revendication 1, dans lequel $R_1$, $R_2$, $R_3$, $R_4$ représentent indépendamment des atomes d'hydrogène, des groupes hydroxyle, halogéno, cyano, $C_1$—$C_4$-alkyle, $C_1$—$C_4$-alcoxy, amino, amino substitué ou $SO_3M$, où M est un atome d'hydrogène, un ion ammonium ou un métal alcalin.

3. Procédé selon les revendications 1 ou 2 dans lequel X et Y représentent indépendamment des radicaux phényle amino substitué ayant la formule

(1c) 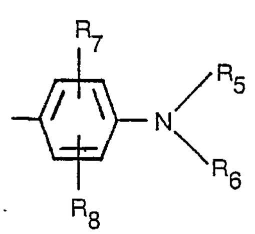

dans laquelle $R_5$ et $R_6$ représentent indépendamment des atomes d'hydrogène, des groupes $C_1$—$C_{12}$alkyle, $C_2$—$C_8$alcoxyalkyle, cycloalkyle, aralkyle, aryle, ou alkyle, cycloalkyle, aralkyle ou aryle, substitués, ou bien $R_5$ et $R_6$ ensemble avec l'atome d'azote qui les relie représentent un cycle

pyrrolidino, piperidino, morpholino, thiomorpholino ou pipérazino, et $R_7$ et $R_8$ représentent indépendamment des atomes d'hydrogène, des groupes hydroxyle, halogéno, cyano, nitro, $C_1$—$C_4$alkyle, $C_1$—$C_4$alcoxy, $C_2$—$C_8$alcoxyalkyle, cycloalkyle, aralkyle, aryle, aryloxy, arylamino, ou des groupes acide caboxylique, ester carboxylique ou amide carboxylique.

4. Procédé selon la revendication 3, dans lequel un ou plusieurs des substituants $R_5$, $R_6$, $R_7$ et $R_8$ contient (contiennent) un groupe aqua-solubilisant en particulier un groupe $SO_3M$, où M est un atome d'hydrogène, un ion ammonium ou un métal alcalin.

5. Procédé selon la revendication 4, dans lequel $R_5$ et $R_6$ sont indépendamment des atomes d'hydrogène, des groupes $C_1$—$C_4$alkyle, $C_2$—$C_4$alcoxyalkyle, cyclohexyle, benzyle, phényle, ou phényle ou benzyle substitué chacun par $SO_3M$, où M est un atome d'hydrogène, un ion ammonium ou un métal alcalin.

6. Procédé selon la revendication 1, dans lequel X et Y représentent indépendamment un radical indolyle ayant la formule

(1d) 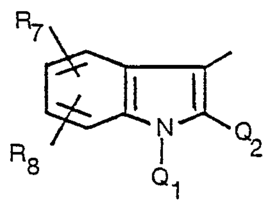

dans laquelle $Q_1$ représente un atome d'hydrogène, un groupe $C_1$—$C_{12}$alkyle, $C_2$—$C_{12}$alcényle ou benzyle; $Q_2$ représente un atome d'hydrogène, un groupe $C_1$—$C_{12}$alkyle ou aryle, et $R_7$ et $R_8$ indépendamment représentent des atomes d'hydrogène, des groupes hydroxyle, halogéno, cyano, nitro, $C_1$—$C_4$alkyle, $C_1$—$C_4$alcoxy, $C_2$—$C_8$alcoxyalkyle, cycloalkyle, aralkyle, aryle, aryloxy, arylamino, ou des groupes acide carboxylique, ester carboxylique ou amide carboxylique.

7. Procédé selon la revendication 1, dans lequel Z est un radical de formule

(3) 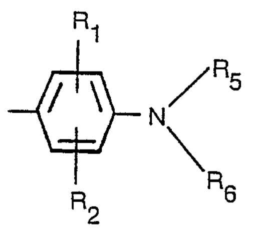 ou 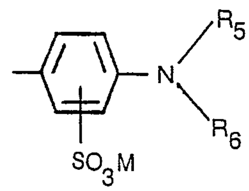 (4)

dans lesquelles $R_5$ et $R_6$ représentent indépendamment des atomes d'hydrogène, des groupes $C_1$—$C_{12}$alkyle, $C_2$—$C_8$alcoxyalkyle, cycloalkyle, aralkyle, aryle, ou alkyle, cycloalkyle, aralkyle ou aryle substitués, ou bien $R_5$ et $R_6$ ensemble avec l'atome d'azote qui les relie représentent un cycle pyrrolidino, pipéridino, morpholino, thiomorpholino ou pipérazino; M est un atome d'hydrogène, un ion ammonium ou un métal alcalin et $R_1$ et $R_2$ sont tels que définis dans la revendication 1.

8. Procédé selon la revendication 7, dans lequel Z est un radical de formules

(3a) 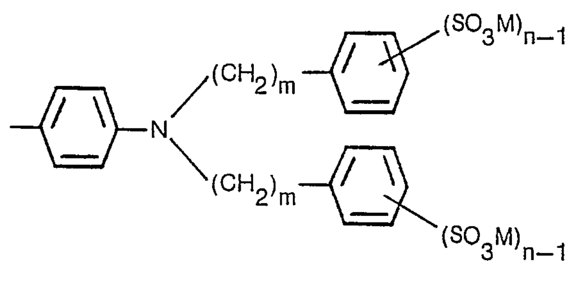

ou

(3b) 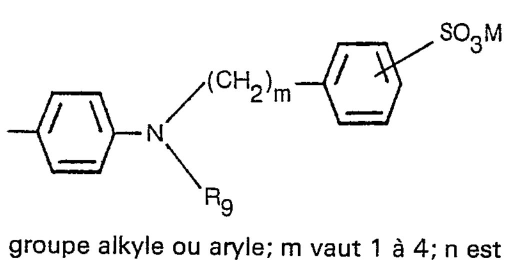

dans lesquelles $R_9$ est un groupe alkyle ou aryle; m vaut 1 à 4; n est 1 ou 2, et M est tel que défini dans la revendication 7.

9. Procédé selon la revendication 1, dans lequel Z est un radical de formules

(5) 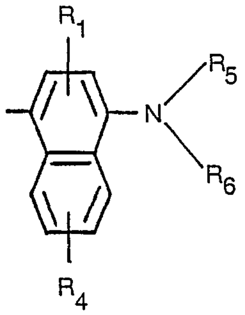 ou (6) 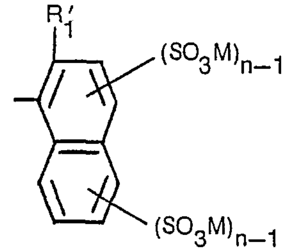

dans lesquelles $R'_1$ est un atome d'hydrogène ou un groupe hydroxyle; n est 1 ou 2, et $R_1$ et $R_4$ sont tels que définis dans la revendication 1; $R_5$ et $R_6$ représentent indépendamment des atomes d'hydrogène, des groupes $C_1$—$C_{12}$alkyle, $C_2$—$C_8$alcoxyalkyle, cycloalkyle, aralkyle, aryle ou des groupes alkyle, cycloalkyle, aralkyle ou aryle substitués, ou bien $R_5$ et $R_6$ ensemble avec l'atome d'azote qui les relie représentent un cycle pyrrolidino, pipéridino, morpholino, thiomorpholino ou pipérazino; M est un atome d'hydrogène, un ion ammonium ou un métal alcalin.

10. Procédé selon la revendication 8 ou 9, dans lequel Z est un radical de formule (3a) ou (6).

11. Procédé selon la revendication 1, dans lequel les composés de formules (2a) et (2b) ou leurs mélanges sont préparés en faisant réagir un composé de formule

(7) 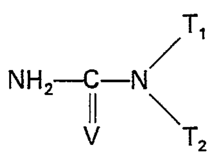

dans laquelle V, $T_1$ et $T_2$ ont les définitions données dans la revendication 1, dans des conditions acides, avec 1 ou deux équivalents molaires d'un aldéhyde qui est X—CHO ou Y—CHO et avec 1 ou 2 équivalents molaires d'un composé XH ou YH, où X et Y ont les définitions données dans la revendication 1.

12. Procédé selon la revendication 11, dans lequel on fait réagir le p-diméthylamino-benzaldéhyde avec l'urée et la N,N-diméthylaniline, en présence d'un acide, pour former la N-[4,4'-diméthylamino-diphényl-méthyl]urée ou la N,N'-bis[4,4'-diméthyl-amino-diphényl-méthyl]urée ou un mélange de ces dérivés de l'urée.

13. Procédé selon la revendication 1, dans lequel un composé de formule (2a) est utilisé, où chacun des X et Y est un radical carbocyclique aromatique portant un groupe amino non substitué ou substitué en position para, dans lequel ce composé de formule (2a) est obtenu en faisant réagir un composé de formule

(7) 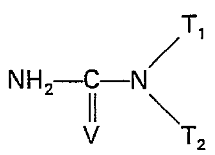

où V, $T_1$ et $T_2$ ont les définitions données dans la revendication 1, dans des conditions acides avec un benzydrol de formule

(10) 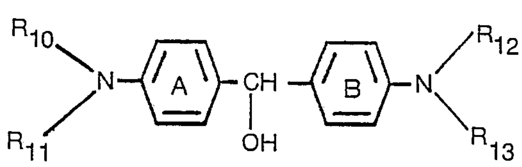

dans laquelle les noyaux benzène A et B sont non substitués ou substitués par un ou plusieurs substituants choisis parmi les atomes d'halogène, les groupes cyano, nitro, $C_1$—$C_4$alkyle et $C_1$—$C_4$alcoxy, et dans laquelle $R_{10}$, $R_{11}$, $R_{12}$ et $R_{13}$ représentent chacun indépendamment un groupe $C_1$—$C_{12}$alkyle, cycloalkyle, aralkyle, aryle, alcoxyaryle dans lequel le groupe alcoxy a 2 à 8 atomes de carbone, ou un groupe alkyle, cycloalkye, aralkyle ou aryle, substitué.

**Patentansprüche**

1. Verfahren zur Herstellung einer Verbindung der Formel

(1) 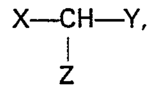

dadurch gekennzeichnet, dass man unter sauren Bedingungen eine Verbindung der Formel

(2a) 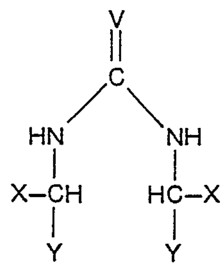 oder (2b) 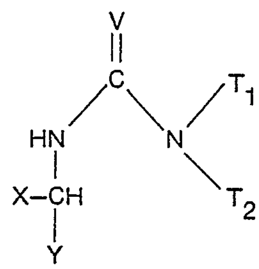

oder eine Mischung der Verbindungen (2a) und (2b) mit einer Verbindung ZH, welche ein reaktionsfähiges Wasserstoffatom aufweist, umsetzt, wobei X und Y gleich oder verschieden sind und jedes einen aromatischen carbocyclischen Rest, welcher in para-Stellung zur angegebenen Bindung eine unsubstituierte oder substituierte Aminogruppe aufweist, oder einen heterocyclischen Rest darstellt, und Z einen Arylrest der Formel

(1a) 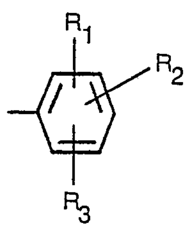 oder (1b) 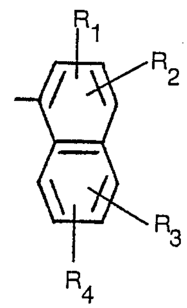

darstellt, worin $R_1$, $R_2$, $R_3$ und $R_4$, unabhängig voneinander, je Wasserstoff, Hydroxyl, Halogen, Cyano, Nitro, $C_1$—$C_{12}$-Alkyl, $C_1$—$C_{12}$-Alkoxy, $C_2$—$C_8$-Alkoxyalkyl, Cycloalkyl, Aralkyl, Aryl, Aryloxy, oder substituiertes Alkyl, Cycloalkyl, Aralkyl oder Aryl, oder Amino oder substituiertes Amino, oder eine Sulfonsäuregruppe oder ein Derivat davon, V Sauerstoff, Schwefel oder Imino and $T_1$ und $T_2$, unabhängig voneinander, Wasserstoff, $C_1$—$C_{12}$-Alkyl, $C_2$—$C_{12}$-Alkenyl, Aryl, Aralkyl, und $T_1$ auch Amido oder Ureido oder $T_1$ und $T_2$ zusammen mit dem sie verbinenden Stickstoffatom einen fünf- oder sechsgliedrigen heterocyclischen Rest bedeuten.

2. Verfahren gemäss Anspruch 1, worin $R_1$, $R_2$, $R_3$ und $R_4$, unabhängig voneinander, Wasserstoff, Hydroxyl, Halogen, Cyano, $C_1$—$C_4$-Alkyl, $C_1$—$C_4$-Alkoxy, Amino, substituiertes Amino oder —$SO_3M$ bedeuten, worin M Wasserstoff, Ammonium oder Alkalimetall ist.

3. Verfahren gemäss Anspruch 1 oder 2, worin X und Y, unabhängig voneinander einen Aminophenylrest der Formel

(1c) 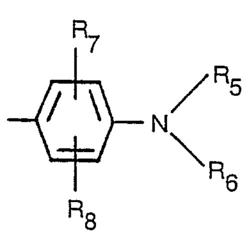

darstellt, worin $R_5$ und $R_6$, unabhängig voneinander, Wasserstoff, $C_1$—$C_{12}$-Alkyl, $C_2$—$C_8$-Alkoxyalkyl, Cycloalkyl, Aralkyl, Aryl oder substituiertes Alkyl, Cycloalkyl, Aralkyl oder Aryl, oder $R_5$ und $R_6$ zusammen mit dem sie verbindenden Stickstoffatom Pyrrolidino, Piperidino, Morpholino, Thiomorpholino oder Piperazino, und $R_7$ und $R_8$, unabhängig voneinander, Wasserstoff, Hydroxyl, Halogen, Cyano, Nitro, $C_1$—$C_4$-Alkyl, $C_1$—$C_4$-Alkoxy, $C_2$—$C_8$-Alkoxyalkyl, Cycloalkyl, Aralkyl, Aryl, Aryloxy, Arylamino oder eine Carbonsäure-, Carbonsäureester- oder Carbonsäureamidgruppe bedeuten.

4. Verfahren gemäss Anspruch 3, worin einer oder mehrere Substituenten $R_5$, $R_6$, $R_7$ und $R_8$ eine wasserlöslichmachende Gruppe, insbesondere eine $—SO_3M$-Gruppe enthalten, worin M Wasserstoff, Ammonium oder Alkalimetall ist.

5. Verfahren gemäss Anspruch 4, worin $R_5$ und $R_6$, unabhängig voneinander, Wasserstoff, $C_1—C_4$-Alkyl, $C_2—C_4$-Akloxyalkyl, Cyclohexyl, Benzyl, Phenyl, oder durch $—SO_3M$ substituiertes Phenyl oder Benzyl bedeuten, worin M Wasserstoff, Ammonium oder Alkalimetall ist.

6. Verfahren gemäss Anspruch 1 worin X und Y, unabhängig voneinander, einen Indolylrest der Formel

(1d) 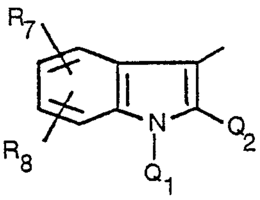

darstellt, worin $Q_1$ Wasserstoff, $C_1—C_{12}$-Alkyl, $C_2—C_{12}$-Alkenyl oder Benzyl, $Q_2$ Wasserstoff, $C_1—C_{12}$-Alkyl oder Aryl, und $R_7$ und $R_8$, unabhängig voneinander Wasserstoff, Hydroxyl, Halogen, Cyano, Nitro, $C_1—C_4$-Alkyl, $C_1—C_4$-Alkoxy, $C_2—C_8$-Alkoxyalkyl, Cycloalkyl, Aralkyl, Aryl, Aryloxy, Arylamino, oder eine Carbonsäure-, Carbonsäureester- oder eine Carbonsäureamidgruppe bedeuten.

7. Verfahren gemäss Anspruch 1, worin Z einen Rest der Formel

(3) 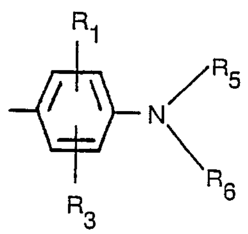 oder (4) 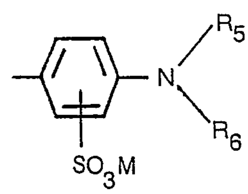

darstellt, worin $R_5$ und $R_6$, unabhängig voneinander, Wasserstoff, $C_1—C_{12}$-Alkyl, $C_2—C_8$-Alkoxyalkyl, Cycloalkyl, Aralkyl, Aryl oder substituiertes Alkyl, Cycloalkyl, Aralkyl oder Aryl, oder $R_5$ und $R_6$ zusammen mit dem sie verbindenden Stickstoffatom Pyrrolidino, Piperidino, Morpholino, Thiomorpholino oder Piperazino und M Wasserstoff, Ammonium oder Alkalimetall bedeuten und $R_1$ und $R_2$ die in Anspruch 1 angegebene Bedeutung haben.

8. Verfahren gemäss Anspruch 7, worin Z ein Rest der Formel

(3a) 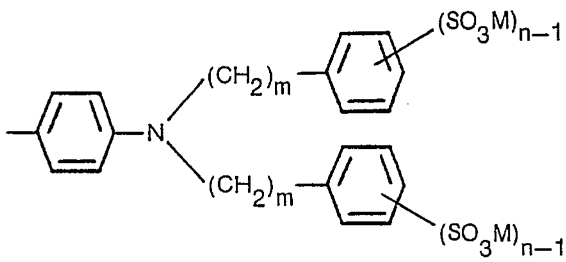

oder

(3b) 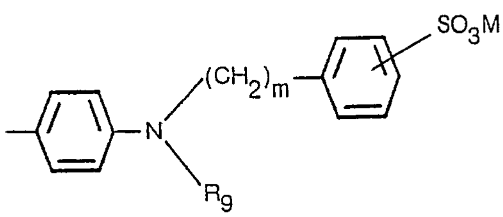

ist, worin $R_9$ Alkyl oder Aryl, m 1 bis 4 und n 1 oder 2 ist und M die in Anspruch 7 angegebene Bedeutung hat.

9. Verfahren gemäss Anspruch 1, worin Z ein Rest der Formel

(5) 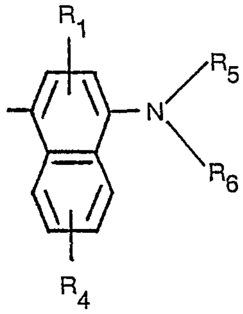 oder (6) 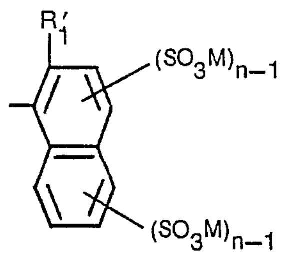

ist, worin $R_1'$ Wasserstoff oder Hydroxy, n 1 oder 2, $R_5$ und $R_6$, unabhängig voneinander, Wasserstoff, $C_1$—$C_{12}$-Alkyl, $C_2$—$C_8$-Alkoxyalkyl, Cycloalkyl, Aralkyl, Aryl oder substituiertes Alkyl, Cycloalkyl, Aralkyl oder Aryl, oder $R_5$ und $R_6$ zusammen mit dem sie verbindenden Stickstoffatom Pyrrolidino, Piperidino, Morpholino, Thiomorpholino, oder Piperazino und M Wasserstoff, Ammonium oder Alkalimetall bedeuten und $R_1$ und $R_4$ die in Anspruch 1 angegebene Bedeutung haben.

10. Verfahren gemäss Anspruch 8 oder 9, worin Z ein Rest der Formel (3a) oder (6) ist.

11. Verfahren gemäss Anspruch 1, worin die Verbindungen der Formel (2a) oder (2b) oder eine Mischung davon durch Umsetzung under sauren Bedingungen Verbindung der Formel

(7) 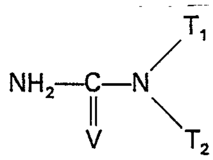

worin V, $T_1$ und $T_2$ die in Anspruch 1 angegebene Bedeutung haben, mit 1 oder 2 Moläquivalenten einer Verbindung XH oder YH, worin X und Y die in Anspruch 1 angegebene Bedeutung haben, hergestellt werden.

12. Verfahren gemäss Anspruch 11, worin p-Dimethylamino-benzaldehyd mit Harnstoff und N,N-Dimethylanilin in Gegenwart einer Säure unter Bildung von N-(4,4'-Dimethylamino-diphenylmethyl)-harnstoff oder N,N-Bis-(4,4'-dimethylamino-diphenylmethyl)-harnstoff oder einer Mischung dieser Harnstoffderivate umgesetzt wird.

13. Verfahren gemäss Anspruch 1, worin eine Verbindung der Formel (2a), worin jedes von X und Y ein aromatischer carbocyclischer Rest mit einer unsubstituierten oder substituierten Aminogruppe in para-Stellung ist, verwendet wird, wobei die Verbindung der Formel (2a) durch Umsetzung einer Verbindung der Formel

(7) 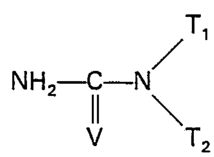

in der V, $T_1$ und $T_2$ die in Anpruch 1 angegebene Bedeutung haben, mit einem Benzhydrol der Formel

(10) 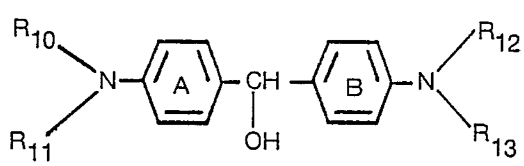

worin die Benzolringe A und B unsubstituiert oder durch einen oder mehrere Substituenten ausgewählt aus Halogen, Cyano, Nitro, $C_1$—$C_4$-Alkyl und $C_1$—$C_4$-Alkoxy substituiert sind und worin $R_{10}$, $R_{11}$, $R_{12}$ und $R_{13}$, unabhängig voneinander, je $C_1$—$C_{12}$-Alkyl, Cycloalkyl, Aralkyl, Aryl, Alkoxyaryl, worin die Alkoxygruppe 2 bis 8 Kohlenstoffatome hat, oder substituiertes Alkyl, Cycloalkyl, Aralkyl oder Aryl bedeuten, unter sauren Bedingungen hergestellt wird.